# EUROPEAN PATENT SPECIFICATION

(11) **EP 2 366 611 B1**
(45) Date of publication and mention of the grant of the patent: **15.05.2013**
(21) Application number: 10156810.3
(22) Date of filing: 17.03.2010
(51) Int. Cl.: B62J 1/08

(54) **Bicycle seat assembly**
Fahrradsattelanordnung
Ensemble de selle de bicyclette

(43) Date of publication of application: 21.09.2011
(73) Proprietor: SDG COMPONENTS INC., Huntington Beach, CA 92647 (US)
(72) Inventor: Huang, Susan, Taichung County (TW); Bohlen, Lance James, Seattle, WA 98166 (US)
(74) Representative: Chaillot, Geneviève

(56) References cited:
- JP-U- 48 064 934
- US-A- 4 033 243
- US-A- 5 921 624
- US-A1- 2010 032 996
- US-B1- 6 561 578

## Description

### FIELD OF THE INVENTION

The present invention relates to a bicycle seat assembly, and more particularly, to a bicycle seat securing device which is cooperated with the I-beam system to provide better support at the rear end of the seat.

### BACKGROUND OF THE INVENTION

A conventional bicycle seat is connected to a top of the seat post and a clamping device is located on a top end of the seat post so as to securely connect the rails located at the underside of the seat.

There are two main systems for the securing device for the bicycle seat, one is the International system and the other is the I-beam system. The two systems include individual structures so that they are not compatible to each other. In other words, the clamping device for the International system cannot be used to the I-beam system, vice versa.

The international system includes two rails at the underside of the seat and the clamping device includes a first clamping member and a second clamping member which is located on the first clamping member. The first and second clamping members form a clamping space and can be pivotable about a center of the clamping device. An adjustment device includes a guide rail and a guide member which is movable connected to the guide rail. An adjustment member includes two threaded sections, one threaded section is connected to the guide member and the other section is connected to the clamping device.

The I-beam system includes a rail which is connected axially to the underside of the seat so that the clamping device on the seat post can move along the rail to adjust the seat. U.S. Patent Number 6,561,578 discloses a seat which includes an extension portion extending from the rear end of the seat and the rail includes two extension rods which extend parallel to the extension portion of the seat. The clamping device is connected to the posts and clamps the rail to connect the seat on the seat post.

Another I-beam system includes a fixing frame connected to the seat tube and a support frame is cooperated with the fixing frame by toothed members. The rail is clamped between the toothed members and a sleeve or nut extends through the toothed members and a bolt extends through the fixing frame and the support frame and is threadedly connected to the sleeve or the nut to secure the connection of the rail and the toothed members. The seat can be adjusted along the rail by loosening the bolt.

Nevertheless, for the I-beam system, there is only one rail at the underside of the seat and the load of the user applies mainly on the rear end of the seat, such that the rear end of the seat tends to be deformed or broken within a short period of time. Besides, the seat is made of material for comfortable and the rail is made of material that is strong to support the load. The connection portion between the two different materials can easily be separated and leads injury to the riders.

The present invention intends to provide a bicycle seat securing device for the I-beam system seat to improve its structural strength so as to improve the shortcoming of the conventional design.

### SUMMARY OF THE INVENTION

The present invention relates to a bicycle seat assembly according to claim 1.

US 5,921,624 discloses a seat assembly having the features of the preamble of claim 1.

The primary object of the present invention is to provide a bicycle seat assembly wherein the front end of frame is securely connected to the front end of the seat by the locking unit and the rear end of the frame is connected to the rear end of the seat by two rear fork rods so as to provide better support to the seat.

Another object of the present invention is to provide a bicycle seat assembly which includes the I-beam system and the support at the rear end of the seat is enhanced.

Yet another object of the present invention is to provide a bicycle seat assembly which is easily to be manufactured and assembled.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the bicycle seat assembly of the present invention with the I-beam system connected thereto;
Fig. 2 is an exploded view to show the bicycle seat assembly of the present invention;
Fig. 3 is a cross sectional view of the bicycle seat assembly of the present invention;
Fig. 3-1 is an enlarged cross sectional view of the connection of the locking unit and the front engaging end of the frame;
Fig. 4 is an exploded view to show a second embodiment of the bicycle seat assembly of the present invention;
Fig. 5 is a cross sectional view of the bicycle seat assembly of the present invention as disclosed in Fig. 4;
Fig. 5-1 is an enlarged cross sectional view of the connection of the locking unit and the front engaging end of the frame as disclosed in Fig. 5;
Fig. 6 is a perspective view to show that a cover is connected to the front end of the seat of the present invention;
Fig. 7 is an exploded view to show the cover and the bicycle seat assembly of the present invention;
Fig. 8 is a cross sectional view of the bicycle seat assembly of the present invention as disclosed in Fig. 6, and
Fig. 8-1 is an enlarged cross sectional view of the connection of the locking unit, the cover and the front engaging end of the frame as disclosed in Fig. 8.

### DETAILED DESCRIPTION OF THE PREFERRED EMBODIMENT

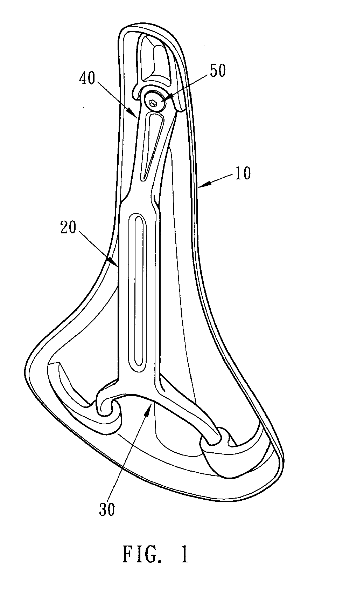

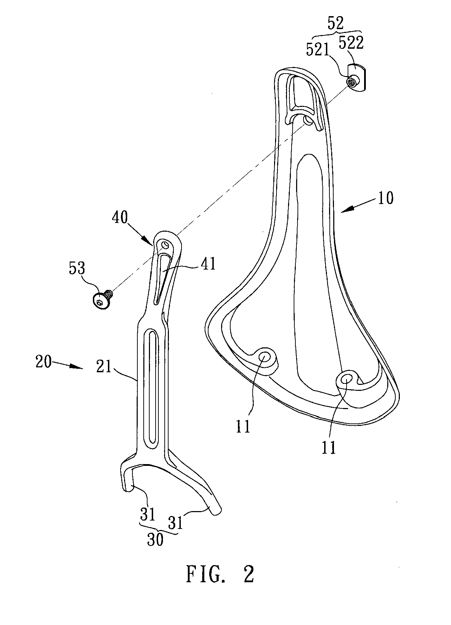

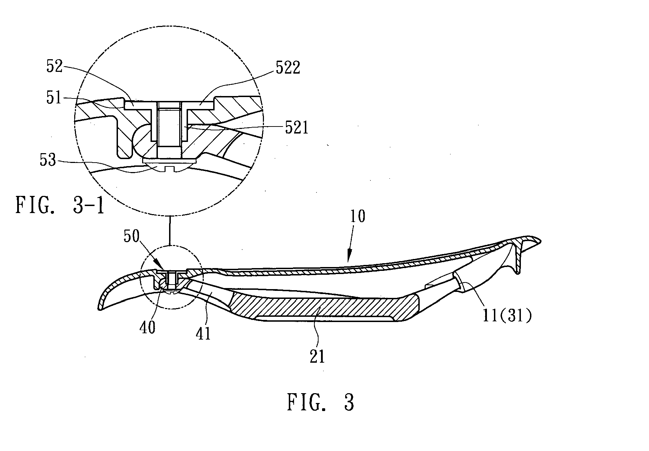

Referring to Figs. 1, 2, 3 and 3-1, the bicycle seat assembly of the present invention comprises a seat 10 and an elongate frame 20 is connected axially to the underside of the seat 10. The frame 20 is located substantially horizontally at the underside of the seat 10. Two rear connection portions 11 are located at the rear end of the underside of the seat 10.

The frame 20 includes a front end which is the front engaging end 40, a rear end which is the rear fork portion 30, and a secured portion 21 which is located a mediate portion of the frame 20. The rear fork portion 30 includes two rear fork rods 31 which are inserted into the two rear connection portions 11 of the seat 10.

The front engaging end 40 is located in opposite to the rear fork portion 30 and includes a through hole 41 so as to reduce the weight of the frame 20. The secured portion 21 is clamped by the clamping device on the seat post which is not shown.

A locking unit 50 includes a first locking member 52 and a second locking member 53. The front end of the seat 10 includes a recess 51 defined in a top thereof. The first locking member 51 includes a plate 522 and a connection portion 521 which extends from the plate 522. The plate 522 is engaged with the recess 51 and the connection portion 521 extends through the seat 10. The second locking member 53 extends through the front engaging end 40 and the is threadedly connected to the connection portion 521 to lock the front engaging end 40 to the seat 10.

The front engaging end 40, the secured portion 21 and the rear fork portion 30 can be made as one piece. The two rear fork rods 31 are connected with the two rear connection portions 11 and the front engaging end 40 is fixed to the front end of the seat 10 by the locking unit 50. The engagement of the plate 522 of the first locking member 52 and the recess 51 in the seat 10 ensures that the locking unit 50 firmly secures the front engaging end 40 to the seat 10. The two rear fork rods 31 provide better support at the rear end of the seat 10. The one-piece frame 20 can be made by the material that bears high stress and has higher level of hardness and the seat 10 is made by plastic material which is soft and flexible to provide comfortable touch to the riders.

Besides, the second locking member 53 is threadedly connected to the connection portion 521 of the first locking member 52, the plate 522 of the first locking member 52 provides a larger contact area with the seat 10 so that the connection of the first and second locking members 52, 53 are enhanced.

The split two rear fork rods 31 extend toward two different directions to include larger support area which improves the shortcomings of the conventional I-beam system bicycle seat assembly that has less support at the rear end of the seat.

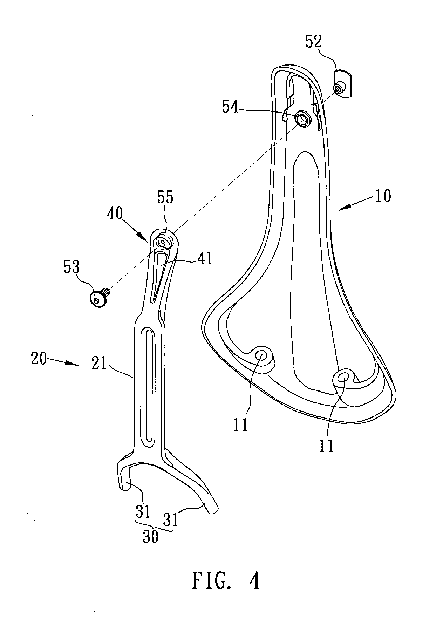

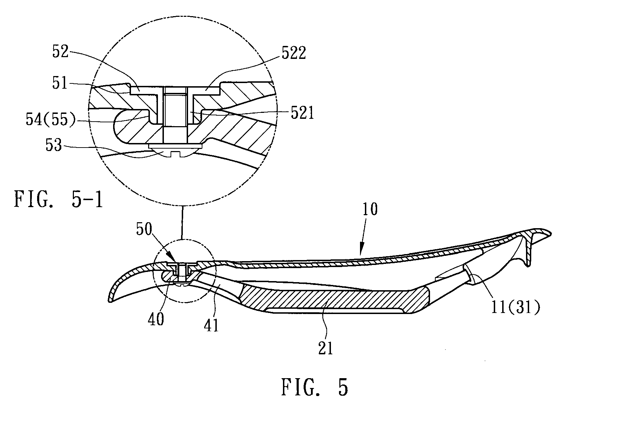

Figs. 4, 5 and 5-1 show a second embodiment of the bicycle seat assembly of the present invention, wherein a reception recess 55 is defined in the front engaging end 40 and the front end of the seat 10 includes an insertion tube 54 extending from the underside of the front end of the seat 10. The insertion tube 54 is engaged with the reception recess 55. The connection portion 521 of the first locking member 52 is then inserted through the insertion tube 54 and is connected with the second locking member 53. By the engagement of the insertion tube 54 and the reception recess 55, the second locking member 53 and the connection portion 521 of the first locking member 52 are easily set in alignment with each other. This avoid from damaging the threads of the second locking member 53 and the connection portion 521 of the first locking member 52.

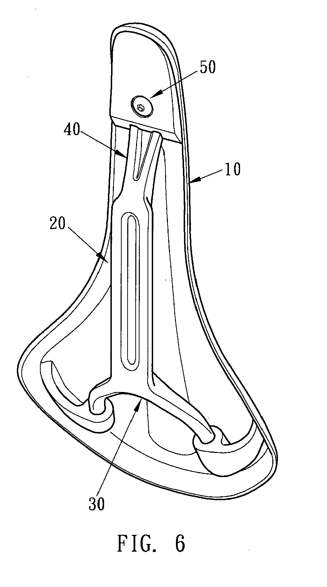

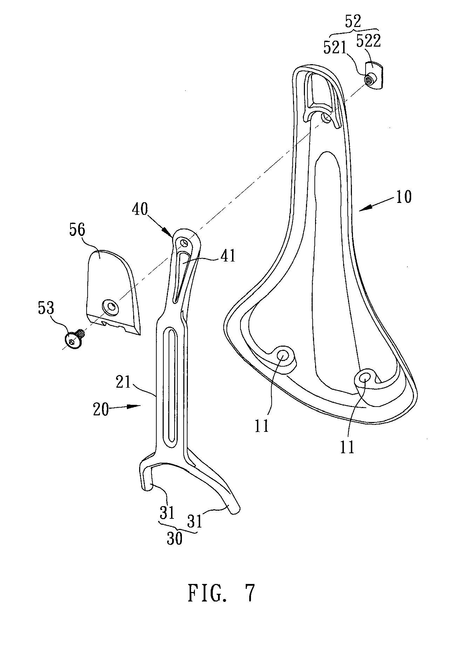

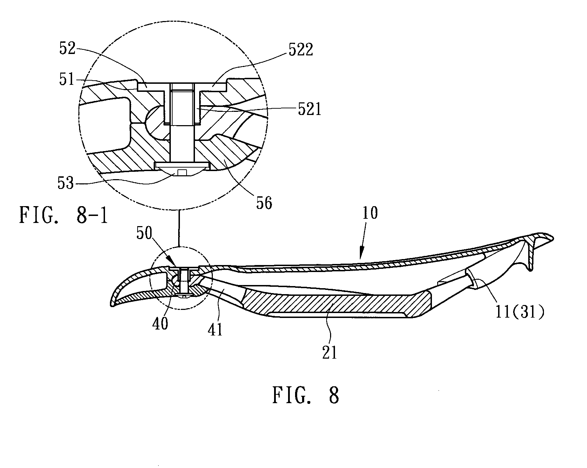

Figs. 6, 7, 8 and 8-1 show that a cover 56 is connected to the seat 10 and covers the locking unit 50 and the front engaging end 40. The cover 56 is sized to cover the front engaging end 40 of the frame 20 and the second locking member 53 extends through the cover 56 and the front engaging end 40 and is threadedly connected to the first locking member 52. The cover 56 protects the first and second locking members 52, 53 from being accessed by dust and water. Furthermore, because the head of the second locking member 53 is stopped by the outside of the cover 56, so that the contact area of the second locking member 53 is increased to further enhance the connection of the first and second locking members 52, 53.

While we have shown and described the embodiment in accordance with the present invention, it should be clear to those skilled in the art that further embodiments may be made without departing from the scope of the present invention.

## Claims

1. A bicycle seat assembly comprising:
a seat (10);
an elongate frame (20) including a front end, a rear end and a secured portion (21) located a mediate portion of the frame (20), a rear fork portion (30) formed at the rear end of the frame (20) and including two rear fork rods (31) which are connected to a rear end of the seat (10), wherein the front end of the frame (20) includes a front engaging end (40) and
a locking unit (50) including a first locking member (52) and a second locking member (53), the first locking member (52) extending through a front end of the seat (10) and the second locking member (53) extending through the front engaging end (40) of the frame (20) and connected to the first locking member (52) so as to connect the frame (20) to an underside of the seat (10),
**characterized by** the fact that the first locking member (52) includes a plate (522) and a connection portion (521) which extends from the plate (522), the front end of the seat (10) includes a recess (51) and the plate (522) is engaged with the recess (51), the connection portion (521) extends through the seat (10) and the second locking member (53) is threadedly connected to the connection portion (521) to lock the front engaging end (40) of the frame (20) to the seat (10).

2. The assembly as claimed in claim 1, wherein two rear connection portions (11) are located at the rear end of the underside of the seat (10) and the two rear fork rods (31) are connected with the two rear connection portions (11).

3. The assembly as claimed in claim 1, wherein the front end of the frame (20) includes a front engaging end (40), the locking unit (50) secures the front engaging end (40) of the frame (20) to the seat (10).

4. The assembly as claimed in claim 1, wherein the two rear fork rods (31) extend toward two different directions.

5. The assembly as claimed in claim 4, wherein two rear connection portions (11) are located at the rear end of the underside of the seat (10) and the two rear fork rods (31) are inserted into the two rear connection portions (11).

6. The assembly as claimed in claim 1, wherein a through hole (41) is defined through the front engaging end (40).

7. The assembly as claimed in claim 1, wherein the front end of the frame (20) has a front engaging end (40) and a reception recess (55) is defined in the front engaging end (40), the front end of the seat (10) includes an insertion tube (54) which is engaged with the reception recess (55).

8. The assembly as claimed in claim 1, wherein the front end of the frame (20) has a front engaging end (40) and a cover (56) is connected to the seat (10) and covers the locking unit (50) and the front engaging end (40).

9. The assembly as claimed in claim 8, wherein the locking unit (50) includes a first locking member (52) and a second locking member (53), the first locking member (52) extends through the seat (10) and the second locking member (53) extends through the cover (56) and the front engaging end (40) and is threadedly connected to the first locking member (52).

10. The assembly as claimed in claim 1, wherein the frame (20) is axially connected to the seat (10) and located substantially horizontally.

## Patentansprüche

1. Fahrradsattelanordnung, umfassend:
einen Sattel (10);
eine längliche Unterkonstruktion (20), aufweisend ein vorderes Ende, ein hinteres Ende und einen befestigten Abschnitt (21), der sich einen mittleren Abschnitt der Unterkonstruktion (20) befindet, wobei ein hinterer Gabelabschnitt (30) am hinteren Ende der Unterkonstruktion (20) ausgebildet ist und zwei hintere Gabelstangen (31) aufweist, die mit einem hinteren Ende des Sattels (10) verbunden sind, wobei das vordere Ende der Unterkonstruktion (20) ein vorderes Eingriffsende (40) aufweist, und
eine Arretierungseinheit (50), die ein erstes Arretierungselement (52) und ein zweites Arretierungselement (53) aufweist, wobei das erste Arretierungselement (52) durch ein vorderes Ende des Sattels (10) verläuft und das zweite Arretierungselement (53) durch das vordere Eingriffsende (40) der Unterkonstruktion (20) verläuft und mit dem ersten Arretierungselement (52) verbunden ist, um die Unterkonstruktion (20) mit einer Unterseite des Sattels (10) zu verbinden,
**dadurch gekennzeichnet, dass** das erste Arretierungselement (52) eine Platte (522) und einen Verbindungsabschnitt (521), der von der Platte (522) aus verläuft, aufweist, das vordere Ende des Sattels (10) eine Vertiefung (51) aufweist und die Platte (522) mit der Vertiefung (51) in Eingriff steht, der Verbindungsabschnitt (521) durch den Sattel (10) verläuft und das zweite Arretierungselement (53) geschraubt mit dem Verbindungsabschnitt (521) verbunden ist, um das vordere Eingriffsende (40) der Unterkonstruktion (20) an dem Sattel (10) zu arretieren.

2. Anordnung nach Anspruch 1, wobei sich zwei hintere Verbindungsabschnitte (11) am hinteren Ende der Unterseite des Sattels (10) befinden und die zwei hinteren Gabelstangen (31) mit den zwei hinteren Verbindungsabschnitten (11) verbunden sind.

3. Anordnung nach Anspruch 1, wobei das vordere Ende der Unterkonstruktion (20) ein vorderes Eingriffsende (40) aufweist, die Arretierungseinheit (50) das vordere Eingriffsende (40) der Unterkonstruktion (20) an dem Sattel (10) befestigt.

4. Anordnung nach Anspruch 1, wobei die zwei hinteren Gabelstangen (31) in zwei verschiedene Richtungen verlaufen.

5. Anordnung nach Anspruch 4, wobei sich zwei hintere Verbindungsabschnitte (11) am hinteren Ende der Unterseite des Sattels (10) befinden und die zwei hinteren Gabelstangen (31) in die zwei hinteren Verbindungsabschnitte (11) gesteckt sind.

6. Anordnung nach Anspruch 1, wobei eine Durchgangsbohrung (41) durch das vordere Eingriffsende (40) hindurch definiert ist.

7. Anordnung nach Anspruch 1, wobei das vordere Ende der Unterkonstruktion (20) ein vorderes Eingriffsende (40) aufweist und eine Aufnahmevertiefung (55) in dem vorderen Eingriffsende (40) definiert ist, das vordere Ende des Sattels (10) eine Steckröhre (54) aufweist, die mit der Aufnahmevertiefung (55) in Eingriff steht.

8. Anordnung nach Anspruch 1, wobei das vordere Ende der Unterkonstruktion (20) ein vorderes Eingriffsende (40) aufweist und eine Abdeckung (56) mit dem Sattel (10) verbunden ist und die Arretierungseinheit (50) und das vordere Eingriffsende (40) bedeckt.

9. Anordnung nach Anspruch 8, wobei die Arretierungseinheit (50) ein erstes Arretierungselement (52) und ein zweites Arretierungselement (53) aufweist, das erste Arretierungselement (52) durch den Sattel (10) verläuft und das zweite Arretierungselement (53) durch die Abdeckung (56) und das vordere Eingriffsende (40) verläuft und geschraubt mit dem ersten Arretierungselement (52) verbunden ist.

10. Anordnung nach Anspruch 1, wobei die Unterkonstruktion (20) axial mit dem Sattel (10) verbunden und im Wesentlichen waagerecht angeordnet ist.

## Revendications

1. Ensemble siège de bicyclette comprenant :
un siège (10) ;
un cadre allongé (20) comprenant une extrémité avant, une extrémité arrière et une partie attachée (21) disposée à une partie intermédiaire du cadre (20), une partie de fourche arrière (30) formée à l'extrémité arrière du cadre (20) et comprenant deux tiges de fourche arrière (31) qui sont reliées à une extrémité arrière du siège (10), l'extrémité avant du cadre (20) comprenant une extrémité de prise avant (40), et
une unité de verrouillage (50) comprenant un premier élément de verrouillage (52) et un second élément de verrouillage (53), le premier élément de verrouillage (52) s'étendant à travers une extrémité avant du siège (10) et le second élément de verrouillage (53) s'étendant à travers l'extrémité de prise avant (40) du cadre (20) et étant relié au premier élément de verrouillage (52) de façon à relier le cadre (20) à une face inférieure du siège (10),
**caractérisé par le fait que** le premier élément de verrouillage (52) comprend une plaque (522) et une partie de liaison (521) qui s'étend à partir de la plaque (522), l'extrémité avant du siège (10) comprend une cavité (51) et la plaque (522) vient en prise avec la cavité (51), la partie de liaison (521) s'étend à travers le siège (10) et le second élément de verrouillage (53) est relié par vissage à la partie de liaison (521) pour verrouiller l'extrémité de prise avant (40) du cadre (20) sur le siège (10).

2. Ensemble selon la revendication 1, dans lequel deux parties de liaison arrière (11) sont disposées à l'extrémité arrière de la face inférieure du siège (10) et les deux tiges de fourche arrière (31) sont reliées aux deux parties de liaison arrière (11).

3. Ensemble selon la revendication 1, dans lequel l'extrémité avant du cadre (20) comprend une extrémité de prise avant (40), l'unité de verrouillage (50) fixe l'extrémité de prise avant (40) du cadre (20) au siège (10).

4. Ensemble selon la revendication 1, dans lequel les deux tiges de fourche arrière (31) s'étendent vers deux directions différentes.

5. Ensemble selon la revendication 4, dans lequel deux parties de liaison arrière (11) sont disposées à l'extrémité arrière de la face inférieure du siège (10) et les deux tiges de fourche arrière (31) sont introduites dans les deux parties de liaison arrière (11).

6. Ensemble selon la revendication 1, dans lequel un trou traversant (41) est défini à travers l'extrémité de prise avant (40).

7. Ensemble selon la revendication 1, dans lequel l'extrémité avant du cadre (20) a une extrémité de prise avant (40) et une cavité de réception (55) est définie dans l'extrémité de prise avant (40), l'extrémité avant du siège (10) comprend un tube d'introduction (54) qui vient en prise avec la cavité de réception (55).

8. Ensemble selon la revendication 1, dans lequel l'extrémité avant du cadre (20) a une extrémité de prise avant (40) et un couvercle (56) est relié au siège (10) et recouvre l'unité de verrouillage (50) et l'extrémité de prise avant (40).

9. Ensemble selon la revendication 8, dans lequel l'unité de verrouillage (50) comprend un premier élément de verrouillage (52) et un second élément de verrouillage (53), le premier élément de verrouillage (52) s'étendant à travers le siège (10) et le second élément de verrouillage (53) s'étendant à travers le couvercle (56) et l'extrémité de prise avant (40) et étant relié par filetage au premier élément de verrouillage (52).

10. Ensemble selon la revendication 1, dans lequel le cadre (20) est relié axialement au siège (10) et disposé sensiblement horizontalement.
